Europäisches Patentamt

European Patent Office

Office européen des brevets

(19)

(11) Publication number: **0 495 199 A2**

## EUROPEAN PATENT APPLICATION

(12)

(21) Application number: **91121055.7**

(22) Date of filing: **09.12.91**

(51) Int. Cl.⁵: **G06F 3/033**

(30) Priority: **18.01.91 US 643954**

(43) Date of publication of application:
**22.07.92 Bulletin 92/30**

(84) Designated Contracting States:
**DE FR GB IT**

(71) Applicant: **International Business Machines Corporation**
**Old Orchard Road**
**Armonk, N.Y. 10504(US)**

(72) Inventor: **Balasubramanian, Peruvemba Swaminatha**
**20 Hilltop Drive**
**Chappaqua, New York 10514(US)**
Inventor: **Comerford, Liam David**
**Rd. No. 1, Box 191**
**Carmel, New York 10512(US)**

(74) Representative: **Herzog, Friedrich Joachim, Dipl.-Ing.**
**IBM Deutschland GmbH, Patentwesen und Urheberrecht, Schönaicher Strasse 220**
**W-7030 Böblingen(DE)**

(54) Zero optical parallax stylus interface device.

(57) An improved handwriting capture tablet has zero optical parallax allowing a highly accurate stylus driven computer-user interaction. The plane of contact of the stylus and the plane of the writing image are made to coincide, eliminating all optical parallax and resulting registration errors. This is accomplished by the use of an image transmission device, such as a fiber-optic face plate (23), to transmit the generated image to the stylus plane (23) of contact.

FIG.3

Field of the Invention

The present invention generally relates to handwriting capture tablets used to provide data input to computers and, more particularly, to tablets of the type incorporating a digitizer and a flat panel display operating in conjunction with software that simulates "ink" from an electronic stylus to provide visual feedback to the operator. More specifically, the invention is directed to an apparatus which provides a "paper-like" user interface with no optical parallax.

Description of the Prior Art

The combination of a transparent digitizer and a flat panel display, such as a liquid crystal display (LCD), has been used as a device for supporting user input to computers. The user input may be, for example, handwriting or freehand graphics. Typically, such displays are made to render a trace ("electronic ink") of the stylus path in order to aid the user in guiding the stylus. In many such systems, the accuracy of electronic inking is increased by an alignment procedure which allows the user to inform the computer of the most comfortable relationship between the stylus position and the ink trace. However the system may derive that relationship, the physical structure of displays as they are currently constituted never allow the point of the stylus to come into contact with the "electronic ink" it is supposed to appear to emit.

If the data representing the digitized stylus trace captured during hand writing is plotted, it is apparent that the quality of characters written on such a device is far different than that produced by the same person when a pen or pencil is used on paper. Researchers in the field attribute some substantial portion of these differences to the optical parallax intrinsic to the device. At no time is the physical or visually and tactually perceived point of the stylus in contact with the "ink" it is supposed to appear to emit. No amount of software can compensate for the resulting sensory confusion when the user shifts position or for any other reason views the display from an angle other than that of the original alignment. The fact that the user typically has two eyes and that the emitted "ink" is separated from the stylus point make completely satisfactory software correction of optical parallax impossible.

The results of optical parallax can be observed if captured handwriting data is plotted. Users may be comically inaccurate in forming characters. Strokes which normally form lines which meet, as in the character "A", are often open or crossed. Strokes which are intended to cross, as in the character "t", may not. Users, observing the flaws in the electronic-inked version often overwrite their original entry in an effort to make it look more as they had expected. Overwriting confuses the recognition algorithms resulting in reduced recognition accuracy from the user's efforts to improve character appearance. These problems do not appear with such severity in handwriting or graphic input systems which digitize the position of a stylus while allowing the stylus to leave traces on paper overlying the digitizer surface. In such systems, there is no parallax error, but there is also no computer-driven display at the writing tablet. What is needed is an apparatus which both combines the computer display with the writing surface and which has no optical parallax.

U.S. Patent No. 4,947,156 to Sato et al. addresses the problem of parallax correction in a handwriting capture tablet. The solution proposed by Sato et al. is to provide the user with a set of buttons on the handwriting tablet so that the position of the stylus trace on the screen can be corrected by the user to resemble the user's expectations about indicated stylus position. This solution is not totally effective, as is apparent when one considers the effect on the correction when the user moves from one corner of the display to the diagonal opposite. The correction for one corner will not work for the opposite corner since the parallax is different.

Other examples of attempts to correct for parallax errors in handwriting capture tablets are described in U.S. Patents No. 4,845,346 to Ouchi et al. and No. 4,839,634 to Moore. Ouchi et al. proposes an algorithm to correct for parallax in cathode ray tube (CRT) overlay digitizers used in touch screen user interfaces. Moore describes a method for minimizing parallax and registration errors between the display and the digitizer by integrating them into a single device.

U.S. Patent No. 4,875,036 to Washizuka et al. discloses a handwriting tablet in which the area for writing is given increased contrast at the cost of blanking areas which are not in user for handwriting entry. U.S. Patent No. 4,868,551 to Arditty et al. describes a digitizer for a scanned, light emitting display which consists of a transparent planar optical waveguide which is placed over a CRT display screen. Light passes through the waveguide unless it is coupled into the guide by contact of a diffusing object (such as the user's finger) with the surface of the guide.

SUMMARY OF THE INVENTION

It is therefore an object of the present invention to provide an improved handwriting capture tablet having zero optical parallax resulting in a highly accurate stylus interface device.

This and other objects are advantageously solved basically by the invention as laid down in claim 1. Further embodiments are laid down in the dependent subclaims.

According to the invention, the plane of contact of the stylus and the plane of the writing image are made to coincide, eliminating all parallax and resulting registration errors. This is accomplished by the integration of an image transmission device, a fiber-optic face plate, into a handwriting capture tablet to transmit the generated image to the stylus plane of contact. Conventional fiber optic faceplate technology is not optimal to this task; hence, the faceplate structure is modified by cutting the plate to obtain a bias angle of the optical fibers and, if needed, the faceplate surface is roughened. These changes to conventional faceplate structure improve the match between the user viewing angle and the liquid crystal display (LCD) output, increase the range of viewing angles which are satisfactory, and provide a textured surface for good stylus "feel".

BRIEF DESCRIPTION OF THE DRAWINGS

The foregoing and other objects, aspects and advantages will be better understood from the following detailed description of a preferred embodiment of the invention with reference to the drawing, in which:

Fig. 1    is an exploded cross-sectional view showing the basic construction of a handwriting capture tablet with a top mounted digitizer;

Fig. 2    is an exploded cross-sectional view showing the basic construction of a handwriting capture tablet with a bottom mounted digitizer; and

Fig. 3    is a cross-sectional view showing the construction of the flat panel display used in the preferred embodiment of the invention.

DETAILED DESCRIPTION OF A PREFERRED EMBODIMENT OF THE INVENTION

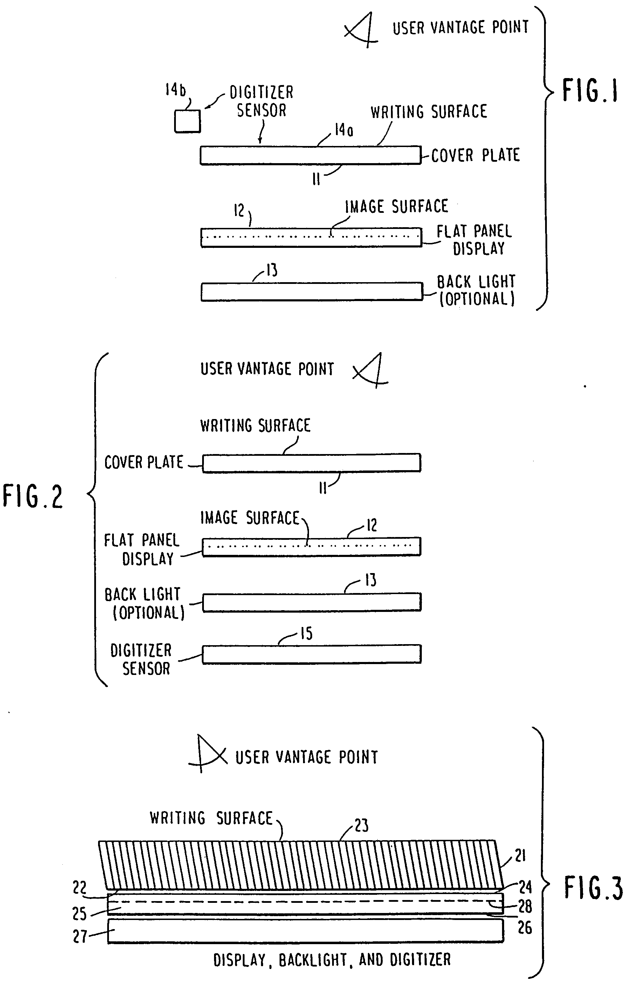

Referring now to the drawing, and more particularly to Fig. 1, there is shown a first, common form of integrated display and digitizer. This is a top mounted digitizer having cover plate 11 having a top surface which serves as the writing surface. Under the cover plate is a flat panel display 12, such as a liquid crystal display (LCD). The image plane is within the volume of the flat panel display. An optional back light panel 13 is below the flat panel display. The digitizer sensor may be either a thin film 14a, such as a resistive film or capacitive array, on or near to the actual writing surface or a device 14b, such as an acoustic sensor or a laser scanner mounted adjacent to the viewing area of the display.

Fig. 2 shows a similar integrated display digitizer except that in this case, the digitizer 15 is mounted below the display. Such systems are generally electromagnetic, and the digitizer 15 may be placed above or below the backlight 13 (if one is included) under the condition that the sensor range is sufficient to digitize to requirements at the level of the writing surface. If correctly structured, the sensor could be mounted within or just above the backlight.

In either the top mounted or bottom mounted digitizer, the cover plate 11 which protects the flat panel display 12 from the user-exerted writing forces is necessary for the user to have a firm surface on which to write and for protection of the flat panel display. This cover plate 11 may be integral to some manufacturers' displays or it may be added by the tablet manufacturer. It is the thickness dimension of this cover plate plus the depth of the image within the volume of the LCD, that is the gap between the writing surface of the cover plate 11 and the plane of the image in the flat panel display 12, which cause parallax to be seen from the user's vantage point.

In order to overcome the problem of parallax, it is necessary to move the visual display of data from the image plane within the flat panel display 12 to the writing surface of the cover plate 11 so that the two planes coincide. This is accomplished by the invention by building a tablet in which the cover plate is not made from a monolithic slab of glass or plastic but, rather, is an optical device called a "fiber optic face plate". A fiber optic face plate is a spatially coherent bundle of optical fibers. Typically, the ends of the bundle are flat, polished, and parallel, with the fibers oriented normal to the ends. Fibers in the bundle are fused together to form a solid mass.

In typical face plates, the optical fibers are unclad, uniform in diameter, and uniform in numerical aperture. In commercially available plates, a fiber size in the range from three microns to 35 microns may be selected for a given plate. Numerical apertures in the range from 1.0 to 0.35 are also common in commercial plates. Plates are often made with light absorbing material in the inter-fiber spaces (Extra-Mural Absorption or EMA). The purpose of this material is to reduce fiber cross-talk which would cause image smearing.

According to the invention, the fiber optic face plate is designed to be substituted for the cover plate 11 shown in Figs. 1 and 2. In the preferred embodiment shown in Fig. 3, the fiber optic face plate also serves as the cover plate of the handwriting capture tablet. As shown in Fig. 3, the face plate 21 composed of a bundle of optical fibers has an interior surface 22 and exterior surface 23, with the optical fibers at an angle close to normal to the two surfaces. The exterior surface 23 serves as the writing surface. The interior surface 22 rests on a top surface 24 of an LCD 25. The top surface 24 is a plastic polarizer, which is not a suitable writing surface because it is easily damaged. A bottom surface 26 of the LCD 25 may rest on the backlight or digitizer 27. Additional mounting components may be present as needed in particular packaging situations. If the digitizer of choice is a resistive film type, that film may be made on the top surface 23 of the fiber optic faceplate 21. The thickness of the layers of the liquid crystal display 25 above the image plane 28 should be minimized to allow satisfactory image capture by the fiber optic faceplate 21.

In operation, the fiber optic face plate 21 transmits whatever image is formed in proximity to its interior surface 22 to its exterior surface 23. The mechanism by which this takes place can be thought of as a spatial sampling. Each fiber end samples a small region of the image and "conducts" light from that point to the other end of the fiber. The net effect of the array of image illuminated fibers is that the image appears to be at the opposite surface.

According to one aspect of the invention, the fiber optic face plate differs from conventional face plates. This difference deals with two short comings which a simple normal faceplate presents. The first is that most flat panel displays are designed to give optimal contrast when viewed in one direction. The second is that a handwriting capture tablet user will typically view the tablet from an off-axis position. By cutting the face plate 21 so that the fibers lay normal to the face in one axis but slightly off the normal in the other (appropriate) axis, a face plate with improved light capture and optimal viewing axis is provided. This angle is on the order of 3° to 10° but is dependent both on the display properties and the system packaging. The bias angle is formed so that if the display were resting on a surface in front of the user, the top end of each fiber is closer to the user than the bottom end, as shown in Fig. 3. Similarly, the numerical aperture of the fibers is chosen for the best compromise between the depth-of-field of the fiber acceptance and the size of the user field-of-view. The preferred numerical aperture is approximately 0.56, although this is also dependent on the specifics of the application. The writing surface 23 may be roughened by etching or abrasion to increase light scattering at the surface. This will have the effect of increasing the viewing angle. In addition, the textured surface improves the stylus "feel".

While the invention has been described in terms of a single preferred embodiment, those skilled in the art will recognize that the invention can be practiced with modification within the spirit and scope of the appended claims.

**Claims**

1. A handwriting capture tablet used as a user interface for a computer, said tablet incorporating a digitizer and a flat panel display (25) cooperating with a user operated stylus, said flat panel display including an image forming medium and said tablet operating in conjunction with software running on said computer that simulates "ink" from the stylus by an image formed in said medium wherein the display provides a visible feedback to the user of a trace of the stylus, the improvement which eliminates optical parallax in said interface comprising combined image transmission and writing surface means (21) adjoining said flat panel display (25) for transmitting an image formed in said image forming medium to a writing surface (23) for said stylus.

2. The handwriting capture tablet recited in claim 1 wherein said image transmission and writing surface means comprises a fiber optic faceplate (21) having a first surface (22) adjoining said flat panel display (25) and a second surface (23) which serves as said writing surface.

3. The handwriting capture tablet recited in claim 2 wherein said fiber optic faceplate comprises a plurality of parallel optical fibers having first and second ends, said first ends forming said first surface and said second ends forming said second surface, said fibers being slightly off a normal axis to said flat panel display, thereby improving light capture and providing an optimal viewing axis.

4. The handwriting capture tablet recited in claim 3 wherein said fibers are at an angle in the range of 0° to 20° to said normal axis.

5. The handwriting capture tablet recited in claim 2, 3, or 4 wherein a numerical aperture of the fibers is optimal for image capture from a plane within a flat display device.

6. The handwriting capture tablet recited in any one of claims 2 to 5, wherein said writing surface is roughened to increase light scattering at said writing surface.

7. The handwriting capture tablet recited in any one of the preceding claims 2 to 6, wherein said digitizer is a top mounted preferably capacitive digitizer integrated with said fiber optic faceplate, said digitizer preferably including a thin film, e.g. a resistive film, formed on a surface of said fiber optic faceplate.

8. The handwriting capture tablet recited in any one of the claims 2 to 6, wherein said digitizer is a top mounted preferably acoustic digitizer located near said writing surface.

9. The handwriting capture tablet recited in any one of the claims 2 to 6, wherein said preferably electrocmagnetic digitizer is a bottom mounted digitizer positioned below said flat panel display.

10. The handwriting capture tablet recited in any one of the preceding claims, further including backlighting means beneath said flat panel display for transmitting light through said flat panel display to said faceplate.

FIG.1

USER VANTAGE POINT

14b — DIGITIZER SENSOR
14a — WRITING SURFACE
COVER PLATE
11
IMAGE SURFACE
12
FLAT PANEL DISPLAY
13 — BACK LIGHT (OPTIONAL)

FIG.2

USER VANTAGE POINT

COVER PLATE — WRITING SURFACE
11
FLAT PANEL DISPLAY — IMAGE SURFACE — 12
BACK LIGHT (OPTIONAL) — 13
DIGITIZER SENSOR — 15

FIG.3

USER VANTAGE POINT

WRITING SURFACE — 23
21
22 — 24
25 — 28
27 — 26
DISPLAY, BACKLIGHT, AND DIGITIZER